# EUROPÄISCHE PATENTANMELDUNG

(11) **EP 2 704 003 A1**
(43) Veröffentlichungstag der Anmeldung: **05.03.2014**
(21) Anmeldenummer: 12182314.0
(22) Anmeldetag: 30.08.2012
(51) Int. Cl.: G06F 9/44, G06F 3/0489

(54) **System zur Projektierung oder Einrichtung einer technischen Anlage**

(71) Anmelder: Siemens Aktiengesellschaft, 80333 München (DE)
(72) Erfinder: Fister, Markus, 91054 Erlangen (DE); Hey, Uwe, 90475 Nürnberg (DE); Munoz Ibarra, Pablo, 91058 Erlangen (DE)

(57) **Zusammenfassung**

Die vorliegende Erfindung beschreibt ein System (10) zur Projektierung oder Einrichtung einer technischen Anlage und/oder eines Automatisierungssystems für eine technische Anlage, mit einer Anzeigeeinrichtung (40) und Bedienelementen (31, 32, 33, 34, 35),
wobei auf der Anzeigeeinrichtung (40) verschiedene Bedienbereiche (100, 210, 220, 230, 300, 340) für verschiedene technische und/oder logische Komponenten der Anlage oder des Automatisierungssystems vorgesehen sind, und wobei auf der Anzeigeeinrichtung (40)
- ein erster Bedienbereich (100, 210, 300) für eine erste Komponente der Anlage oder des Automatisierungssystems mit ersten Informationen über die Komponente (211, 213) und/oder Eingabefeldern (110, 120, 130, 212, 214, 220, 310, 320, 330) zur Einstellung technischer oder logischer Eigenschaften bezüglich der Komponente, und
- ein zweiter Bedienbereich (100, 210, 300) für eine zweite Komponente der Anlage oder des Automatisierungssystems mit zweiten Informationen über die Komponente (211, 213) und/oder zweiten Eingabefeldern (110, 120, 130, 212, 214, 220, 310, 320, 330) zur Einstellung technischer oder logischer Eigenschaften bezüglich der Komponente
vorgesehen ist,
wobei weiterhin ein erstes Bedienelement (32) für das System vorgesehen ist und das System derart eingerichtet und ausgebildet ist, dass bei Bedienung des ersten Bedienelements (32) und ausgewähltem ersten Bedienbereich (100, 210, 300) die Auswahl vom ersten Bedienbereich (100, 210, 300) zum zweiten Bedienbereich (100, 210, 300) wechselt, und
ein zweites Bedienelement (31) für das System vorgesehen ist und das System derart eingerichtet und ausgebildet ist, dass bei Bedienung des zweiten Bedienelements (31) und ausgewähltem ersten Bedienbereich (100, 210, 300) die Auswahl vom ersten Bedienbereich (100, 210, 300) zu einem ersten Eingabefeld (110, 120, 130, 212, 214, 220, 310, 320, 330) innerhalb des ersten Bedienbereichs (100, 210, 300) wechselt.

## Beschreibung

Die vorliegende Erfindung betrifft ein System zur Projektierung oder Einrichtung einer technischen Anlage und/oder eines Automatisierungssystems für eine technische Anlage mit einer Anzeigeeinrichtung und Bedienelementen, wobei auf der Anzeigeeinrichtung verschiedene Bedienbereiche für verschiedene technische und/oder logische Komponenten der Anlage oder des Automatisierungssystems vorgesehen sind, und wobei auf der Anzeigeeinrichtung
- ein erster Bedienbereich für eine erste Komponente der Anlage oder des Automatisierungssystems mit ersten Informationen über die Komponente und/oder Eingabefeldern zur Einstellung technischer oder logischer Eigenschaften bezüglich der Komponente, und
- ein zweiter Bedienbereich für eine zweite Komponente der Anlage oder des Automatisierungssystems mit zwei Informationen über die Komponente und/oder zweiten Eingabefeldern zur Einstellung technischen oder logischer Eigenschaften bezüglich der Komponente vorgesehen ist, wobei der erste Bedienbereich auf der Anzeigeeinrichtung für eine Bedienung ausgewählt ist.

Derartige Systeme sind aus dem Stand der Technik bekannt. So offenbart beispielsweise das US-Patent 6 493 002 B1 einen Computer, beispielsweise zum Entstören eines Druckers, mit einer Bildschirmoberfläche, welche mehrere unabhängig voneinander bedienbare Fenster beinhaltet. Die Fenster können insbesondere mit der Maus ausgewählt werden. Weiterhin können auch in den Fenstern dargestellte Symbole mit der Maus angewählt und entsprechende Applikationen damit gestartet werden. Weiterhin offenbart das Patent auch die Ansteuerung einzelner Applikationen über Tastaturkurzbefehle.

Weiterhin sind Eingabesysteme bekannt, welche auf dem Bildschirm mehrere hintereinander angeordnete "Registerkarten" aufweisen, von welchen jeweils nur die vorderste für einen Benutzer sichtbar ist. Hier kann der Anwender mit z.B. mit einer Kombination aus CTRL- und TAB-Taste zwischen den Registern umschalten und mit Tab zwischen den beinhalteten Feldern wechseln.

Es ist ein Nachteil des Standes der Technik, dass insbesondere bei der Bearbeitung großer Datenmengen oder Eingabe vieler Daten die Benutzung einer Tastatur insbesondere zur Eingabe von Informationen notwendig ist. Bei der Benutzung der Maus zur Bedienung der Eingabemasken muss allerdings eine Hand von der Tastatur genommen werden, was die Eingabe von Informationen verlangsamt. Die Verwendung von Tastaturkürzeln erfordert im Allgemeinen, dass ein Benutzer, wenn er verschiedene Applikationen benötigt, für jede der Applikationen das entsprechende Tastaturkürzel merken muss. Weiterhin ist es z.B. ein Nachteil der genannten "Registerkarten"-Eingabesysteme, dass ein Benutzer immer nur eine aktive Eingabemaske sieht, was komplexere Dateneingaben, die z.B. regelmäßige Wechsel der Register erfordern, recht aufwändig machen kann.

Es ist daher eine Aufgabe der vorliegenden Erfindung, ein System zur Bedienung eines Geräts oder einer technischen Anlage zur Verfügung zu stellen, welche vereinfachte Eingabemöglichkeiten für Informationen mit Hilfe einer Tastatur insbesondere bei komplexeren Bildschirmaufbauten ermöglicht.

Die Aufgabe wird gelöst von einem System gemäß dem Patentanspruch 1.

Dieses System ist zur Projektierung oder Einrichtung einer technischen Anlage und/oder eines Automatisierungssystems für eine technische Anlage ausgebildet und eingerichtet und weist eine Anzeigeeinrichtung sowie Bedienelemente auf, wobei auf der Anzeigeeinrichtung verschiedene Bedienbereiche für verschiedene technische und/oder logische Komponenten der Anlage oder des Automatisierungssystems vorgesehen sind. Dabei weist die Anzeigeeinrichtung einen ersten Bedienbereich für eine erste Komponente der Anlage oder des Automatisierungssystems mit ersten Informationen über die Komponente und/oder Eingabefeldern zur Einstellung technischer oder logischer Eigenschaften bezüglich der Komponente, und einen zweiten Bedienbereich für eine zweite Komponente der Anlage oder des Automatisierungssystems mit zweiten Informationen über die Komponente und/oder zweiten Eingabefeldern zur Einstellung technischer oder logischer Eigenschaften bezüglich der Komponente auf. Weiterhin umfasst das System ein erstes Bedienelement, wobei das System derart eingerichtet und ausgebildet ist, dass bei einer Bedienung des ersten Bedienelements und ausgewähltem ersten Bedienbereich ein Wechsel der Auswahl vom ersten Bedienbereich zum zweiten Bedienbereich erfolgt. Weiterhin umfasst das System ein zweites Bedienelement, wobei das System derart eingerichtet und ausgebildet ist, dass bei einer Bedienung des zweiten Bedienelements und ausgewähltem ersten Bedienbereich ein Wechsel der Auswahl vom ersten Bedienbereich zu einem ersten Eingabefeld innerhalb des ersten Bedienbereichs erfolgt.

Dieses System hat den Vorteil, dass mit nur zwei Bedienelementen eine Navigation zwischen verschiedenen Bedienbereichen und auch in einen Bedienbereich hinein möglich wird und so eine vereinfachte Navigation mit einer Tastatur in einem derartigen System zur Steuerung einer Anlage oder eines Automatisierungssystems ermöglicht wird.

Das System kann beispielsweise als ein Computer oder eine ähnliche vergleichbare Einrichtung mit entsprechender Software und/oder gegebenenfalls entsprechendem Zubehör ausgestaltet sein. Die Anzeigeeinrichtung kann dabei typischer Weise ein Bildschirm oder eine vergleichbare Einrichtung und die Bedienelemente beispielsweise als Tasten einer Tastatur, Maus mit den entsprechenden Drucktasten oder auch sonstige Schaltertasten oder andere Bedienelemente ausgebildet und eingerichtet sein.

Die technische Anlage kann beispielsweise als ein Gerät, eine Maschine, eine technische Anlage inklusive aller Elektronik und Steuerungseinrichtungen ausgestaltet sein. Ein Automatisierungssystem kann beispielsweise als Steuerungssystem für eine technische Anlage oder ein Gerät oder eine vergleichbare Vorrichtung, beispielsweise als eine Speicherprogrammierbare Steuerung (SPS), als ein Computer mit entsprechendem Programm oder auch als ein Netzwerk aus mehreren der genannten Komponenten ausgebildet und eingerichtet sein beziehungsweise derartige Komponenten umfassen.

Die Bedienbereiche für verschiedene technische und/oder logische Komponenten der Anlage oder des Automatisierungssystems können beispielsweise bestimmte Anlagenteile, Anlagensegmente, Antriebe, Sensoren oder sonstige Komponenten betreffen. Weiterhin können solche Komponenten auch die Steuerung, einzelne Teile der Steuerung, eine Speicherverwaltung, ein oder mehrere Anwendungsprogramme, oder einen Controller betreffen. Außerdem können Komponenten der Anlage oder des Automatisierungssystems auch ein Kommunikationssystem der Anlage oder des Automatisierungssystems beziehungsweise Teile davon betreffen. Zudem können Komponenten der Anlage oder des Automatisierungssystems auch Steuerungsteile und Steuerungssegmente oder vergleichbare technische Komponenten betreffen. Logische Komponenten können beispielsweise als Grob- und Fein-Aufbau der Anlage oder des Automatisierungssystems, als eine funktionale Aufteilung innerhalb der Geräte oder Steuerungen, als verschiedene Komponenten der Anlagensteuerung oder Automatisierung oder auch als technische Zusatzinformationen ausgebildet sein.

Der erste und der zweite Bedienbereich bilden zusammen mit eventuellen weiteren Bedienbereichen die "verschiedenen Bedienbereiche" gemäß der vorliegenden Beschreibung.

Eingabefelder innerhalb der Bedienbereiche können beispielsweise zur Eingabe von Informationen auf die verschiedenste Weise (alphanumerisch, grafisch, durch Auswahl, usw. z.B. mittels einer Tastatur oder Maus) ausgebildet und eingerichtet sein. Weiterhin können Eingabefelder beispielsweise auch zur Auswahl verschiedener Optionen, zum Öffnen weiterer Bedienbereiche oder zum Anzeigen bestimmter Informationen in einem anderen Bedienbereich ausgebildet und ausgestaltet sein.

Weiterhin können Eingabefelder auch als weiterer Bedienbereich gemäß der vorliegenden Beschreibung, wiederum mit Informationen und Eingabefeldern gemäß der vorliegenden Beschreibung ausgestaltet und ausgebildet sein.

Eingabefelder im Rahmen der vorliegenden Beschreibung können also beispielsweise als Eingabefelder zur Eingabe von Information, Auswahlfelder zur Auswahl verschiedenster Arten von Informationen und Komponenten, oder auch als Bedienbereiche ausgebildet und ausgestaltet sein.

Das erste und zweite Bedienelement kann beispielsweise jeweils als eine bestimmte Taste einer Tastatur ausgebildet und eingerichtet sein. Beispielsweise kann das erste Bedienelement als die Tabulator-Taste (die so genannte "TAB-Taste") und das zweite Bedienelement beispielsweise als die Eingabetaste (so genannte "RETURN-Taste") oder auch eine "Pfeil-nach-unten"-Taste ausgebildet und eingerichtet sein. Beispielsweise können erstes und zweites Bedienelement aber auch als rechte und linke Maustaste einer Maus-Eingabeeinheit ausgebildet sein oder auch als andere Bedienelemente des Systems.

Unter einer Bedienung eines Bedienelements wird das im Allgemeinen einmalige Bedienen des Bedienelements verstanden, zum Beispiel das einmalige Drücken einer Taste oder eines Schalters oder auch das einmalige Berühren eines berührungssensitiven Bereichs. Allerdings kann auch vorgesehen sein, dass mehrmalige Bedienungen eines Bedienelements als gesondertes Eingabe-Kommando verstanden werden (z.B. der Doppelklick einer Maustaste). Im Rahmen der vorliegenden Beschreibung wird solch eine gesonderte ausgewählte Mehrfachbedienung auch als Bedienung des ersten Bedienelements verstanden.

Ein Bedienbereich oder Eingabefeld kann dann beispielsweise als "ausgewählt" betrachtet werden, wenn eine aktuelle Bedienereingabe durch Bedienelemente des Systems Auswirkung auf diesen Bedienbereich beziehungsweise auf dieses Eingabefeld hat. So bewirkt beispielsweise die Auswahl eines bestimmten Bedienbereichs, dass bei einer Verwendung des ersten Bedienelements dieser Bedienbereich als Ausgangspunkt für die bezweckte Aktion verwendet wird und von diesem Bedienbereich auf den weiteren Bedienbereich gewechselt wird. Die Auswahl eines Eingabefelds bewirkt, dass beispielsweise eine Tastatureingabe dazu führt, dass in dieses Eingabefeld beispielsweise bestimmt Werte eingetragen werden, dass beispielsweise diesem Eingabefeld zugeordnete Zusatzinformationen oder Auswahlinformationen angezeigt werden. Eine beispielsweise Tastatur oder andere Bedienelementeingabe bei einem bestimmten ausgewählten Bedienbereich oder Eingabefeld hat somit immer Auswirkungen auf die dem Bedienbereich beziehungsweise dem Eingabefeld zugeordneten Anlagen oder Steuerungsteile, Komponenten oder Elemente.

Weiterhin ist das System derart ausgestaltet, dass bei einer Bedienung des ersten Bedienelements die Auswahl vom ersten Bedienbereich zum zweiten Bedienbereich oder auch, wenn der zweite Bedienbereich ausgewählt ist, vom zweiten Bedienbereich zum ersten Bedienbereich wechselt.

Allgemein kann, wenn man die Bedienbereiche und Unterbedienbereiche der Bedienbereiche beziehungsweise Eingabefelder der Bedienbereiche als hierarchische Struktur betrachtet, das Verwenden des ersten Bedienelements als Wechseln der entsprechenden Bereiche innerhalb einer gleichbleibenden Hierarchieebene aufgefasst werden.

Innerhalb dieser hierarchischen Betrachtungsweise der Struktur von Eingabebereichen auf einer Anzeigeeinrichtung, kann die Verwendung des zweiten Bedienelements als Sprung von einer Hierarchieebene zu einem Element in einer tieferen, insbesondere eine Hierarchiestufe tieferen Hierarchieebene aufgefasst werden.

Insbesondere kann das System weiterhin derart ausgestaltet und ausgebildet sein, dass nach einer Auswahl des ersten Eingabefelds im ersten Bedienbereich durch das zweite Bedienelement bei nachfolgender Bedienung des ersten Bedienelements die Auswahl zu einem zweiten Eingabefeld innerhalb des ersten Bereichs wechselt.

Diese Ausgestaltung entspricht wiederum der vorstehend genannten Verwendung der Bedienelemente innerhalb eines hierarchischen Konzepts der auf einer Anzeigeeinrichtung angezeigten Elemente. Betrachtet man die Eingabefelder eines Bedienelements als auf einer hierarchischen Ebene stehend, kann durch Bedienung des ersten Bedienelements beispielsweise ein Wechsel zwischen den Eingabefeldern eines Eingabebereichs erfolgen.

Da gemäß der vorstehenden Ausführungen ein Eingabefeld auch als Unter-Bedienbereich ausgebildet sein kann, kann beispielsweise weiterhin durch ein oder mehrfaches Bedienen des ersten Bedienelements dieses z.B. entsprechend seiner Anordnung auf der Anzeigeeinrichtung ausgewählt werden und dann wiederum durch eine Bedienung des zweiten Bedienelements zu weiteren Eingabefeldern innerhalb dieses Unter-Bereichs gewechselt werden, das heißt, beispielsweise eine weitere Hierarchieebene innerhalb der genannten Hierarchiestruktur nach unten.

Nach Auswahl eines Eingabefelds im ersten Bedienbereich kann weiterhin bei nachfolgender Bedienung eines dritten Bedienelements der erste Bedienbereich insgesamt für eine weitere Bedienung ausgewählt werden. Dies entspricht im vorstehend genannten hierarchischen Konzept einem Sprung der Auswahl einer Hierarchieebene innerhalb der Anzeige-Struktur nach oben. Weiterhin können zu den genannten ersten, zweiten, dritten Bedienelementen auch weitere Bedienelemente zur Navigation innerhalb der Bedienbereiche beziehungsweise zwischen den Bedienbereichen vorgesehen sein, die beispielsweise weitere Funktionalitäten bewirken oder auch gleichartige Wirkungen wie beispielsweise das erste, zweite oder dritte Bedienelement haben, um beispielsweise einem Benutzer die Freiheit zu lassen, von ihm bevorzugte Bedienkonzepte zu verwenden.

Mittels des beschriebenen Systems ist also eine sehr einfache Navigation zur Einrichtung oder Projektierung einer Anlage oder eines Automatisierungssystems möglich. Besonders vorteilhaft ist das hier beschriebene System bei einem hierarchischen Aufbau von Bedienbereichen auf der Anzeigeeinrichtung einsetzbar, wobei bestimmte Bedienbereiche als oberste Hierarchieebene und in den jeweiligen Bedienbereichen angeordnete Eingabefelder beziehungsweise Unter-Bedienbereiche als nächste Hierarchieebene eingerichtet sein können und weiterhin entsprechende Unter-Bedienbereiche wiederum gemäß eines Bedienbereichs gemäß der vorliegenden Beschreibung gegliedert sein können.

Durch Verwendung des ersten Bedienelements wird dabei ein Wechsel von verschiedenen Bereichen oder Feldern innerhalb einer Hierarchieebene, also z.B. von Bedienbereich zu Bedienbereich, von Eingabefeld zu Eingabefeld oder zu Unter-Bedienbereich usw. ausgelöst. Durch das zweite Bedienelement wird die Auswahl zu einem Element in einer eine Hierarchieebene tiefer angeordneten Eingabefeld oder Unter-Bedienbereich verändert, während eine Bedienung des dritten Bedienelements einen Wechsel zur nächst höheren, also beispielsweise von einem Eingabefeld zum übergeordneten Bedienbereich oder von einem Unter-Bedienbereich zum nächst höher angeordneten Bedienbereiche auslöst.

Die vorstehende Aufgabe wird auch gelöst durch ein System gemäß der vorliegenden Beschreibung, welches mehrere Bedienbereiche gemäß der vorliegenden Beschreibung umfasst, und wobei
- mittels einer Bedienung des ersten Bedienelements ein Wechsel der Auswahl zwischen den Bedienbereichen oder den Eingabefeldern eines Bedienbereichs in einer vorgebbaren oder vorgegebenen Reihenfolge ausgelöst wird,
- mittels einer Bedienung des zweiten Bedienelements ein Eingabefeld innerhalb des ausgewählten Bedienbereichs ausgewählt wird, und
- mittels einer Bedienung des dritten Bedienelements der einem ausgewählten Eingabefeld zugeordnete Bedienbereich insgesamt ausgewählt wird.

Weiterhin kann mindestens einer der Bedienbereiche einen oder mehrere als Unterbedien-Bereiche ausgebildete Eingabebereich aufweisen, wobei die Unterbedien-Bereiche wiederum als Bedienbereiche gemäß der vorliegenden Beschreibung ausgebildet und eingerichtet sein können, und wobei weiterhin die Auswahl dieser Unterbedien-Bereiche und deren Eingabefelder gemäß der vorliegenden Beschreibung eingerichtet und ausgebildet sein kann.

Weiterhin kann vorgesehen sein, dass ausgewählte Bereiche und/oder Eingabefelder hervorgehoben dargestellt sind. Dabei kann eine solche Hervorhebung als optische Hervorhebung auf der Anzeigeeinrichtung ausgebildet sein. Eine Hervorhebung kann beispielsweise durch Hinterlegung mit einer auffälligen Farbe, dem Versehen des Felds beziehungsweise des Bereichs mit einem auffälligen Rand, beispielsweise einem besonders dickem und/oder gestrichelten Rand, erreicht werden. Das Hervorheben beispielsweise eines Bereichs oder eines größeren Feldes kann z.B. auch durch einen verstärkten Kontrast der darin verwendeten grafischen Elemente erreicht werden.

Weiterhin kann vorgesehen sein, dass nicht ausgewählte Bereiche optisch in den Hintergrund gestellt sind oder werden. Dies kann beispielsweise durch eine Reduktion des Kontrastes in diesen Bereichen, ein Hinterlegen mit einer unauffälligen Farbe, beispielsweise ein Grau, ein Abdunkeln oder auch ein Aufhellen (dass der Bereich quasi "transparenter" wirkt) oder ähnliche Maßnahmen erreicht werden.

Das genannte System kann weiterhin derart ausgebildet und eingerichtet sein, dass der erste und der zweite Bedienbereich und gegebenenfalls auch weitere Bedienbereiche oder auch alle vorgesehenen Bedienbereiche gleichzeitig auf der Anzeigeeinrichtung angezeigt und/oder sichtbar sind.

Durch das hier beschriebene Bedienkonzept wird auch bei solch u.U. recht komplexen Eingabesystemen eine effiziente Dateneingabe ermöglicht. Die genannte Ausgestaltung hat weiterhin z.B. den Vorteil, dass die Unterteilung in Bebedienbereiche beim Bedienen mit der Maus nicht sichtbar oder hinderlich ist.

Die vorstehende Aufgabe wird ebenfalls gelöst durch ein Verfahren zur Bedienung eines Systems gemäß der vorliegenden Beschreibung,
wobei durch ein Bedienen des ersten Bedienelements die Auswahl von einem ausgewählten Bedienbereich zu einem weiteren Bedienbereich, von einem ausgewählten Eingabeelement zu einem weiteren Eingabeelement, oder von eine ausgewählten Unter-Bedienbereich zu einem weiteren Unter-Bedienbereich oder Eingabefeld in einer vorgegebenen oder vorgebbaren Reihenfolge wechselt, und
wobei durch ein Bedienen des zweiten Bedienelements die Auswahl von einem ausgewählten Bedienbereich zu einem Eingabeelement oder als Unter-Bedienbereich ausgebildeten Eingabeelement dieses Bedienbereichs wechselt, und
wobei durch ein Bedienen des dritten Bedienelements die Auswahl von einem ausgewählten Eingabeelement oder einem als Unter-Bedienbereich ausgebildeten Eingabeelement auf den nächst höheren zugeordneten Bedienbereich oder Unter-Bedienbereich wechselt.

Dabei kann wiederum vorgesehen sein, dass ein ausgewählter Bereich oder ein ausgewähltes Feld hervorgehoben wird und/oder ein nicht ausgewählter Bereich optisch in den Hintergrund gestellt wird.

Die vorstehend genannte Aufgabe wird auch gelöst durch ein Computerprogramm-Produkt für ein System gemäß der vorliegenden Beschreibung zur Steuerung von Bediener-Eingaben und/oder zur Ansteuerung der Anzeigeeinrichtung unter Verwendung eines Verfahrens gemäß der vorliegenden Beschreibung. Dabei ertüchtigt ein solches Computerprogramm-Produkt (z.B. eine entsprechende Software), wenn es auf dem System installiert ist, z.B. auf einer Zentraleinheit des Systems, das System dazu, auf entsprechende Bediener-Eingaben hin, z.B. durch das erste, zweite oder dritte Bedienelement, die Anzeige auf der Anzeigeeinrichtung gemäß der vorliegenden Beschreibung anzusteuern und/oder entsprechende Bedienereingaben gemäß der vorliegenden Beschreibung zu verarbeiten.

Weitere vorteilhafte Ausgestaltungen ergeben sich aus den Unteransprüchen.

Nachfolgend wird die vorliegende Erfindung beispielhaft mit Bezug auf die beigefügten Zeichnungen näher erläutert.

Es zeigt:

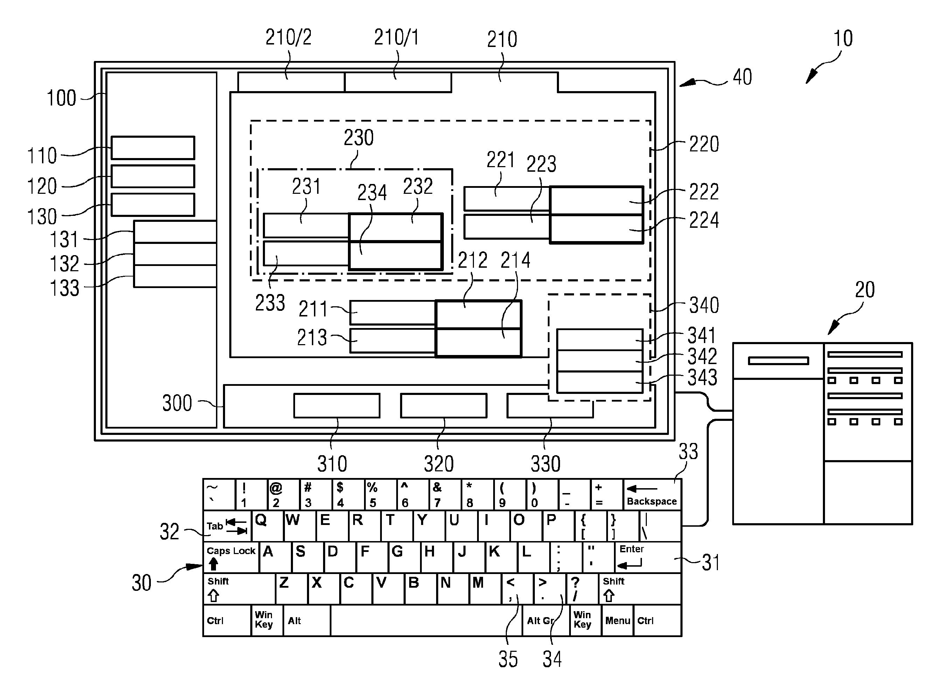

Fig. 1 Beispiel für ein System zur Einrichtung eines Automatisierungssystems.

Fig. 1 zeigt ein System 10 zur Einrichtung eines Automatisierungssystems (nicht in Fig. 1 dargestellt), das System 10 umfassend einen Computer 20 mit daran angeschlossener Tastatur 30 und 40. Auf dem Bildschirm 40 sind verschiedene Eingabebereiche 100, 210, 300 dargestellt, in welchen verschiedene Aspekte des Automatisierungssystems dargestellt sind. Dabei wird im ersten Bedienbereich 100 beispielsweise eine Auflistung aller Komponenten eines aktuell im Automatisierungssystem hinterlegten Automatisierungsprojekts dargestellt. Dies umfassen eine erste Projektkomponente 110, welche beispielsweise eine erste im Automatisierungssystem vorhandene SPS betreffen kann, eine zweite Komponente 120, welche beispielsweise eine zweite im System installierte SPS betreffen kann, und eine dritte Komponente 130, welcher beispielsweise eine dritte Speicherprogrammierbare Steuerung des Automatisierungssystems zugeordnet ist. Die Eingabefelder 110, 120, 130, sind beispielsweise als Auswahlfelder ausgestaltet.

Wenn der erste Bedienbereich 100 ausgewählt ist, kann beispielsweise durch Auslösen einer "Enter-Taste" 31 oder "Return-Taste" 31 der Tastatur 30 ein Wechsel der Auswahl vom ersten Bedienbereich 100 zum ersten Eingabefeld 110 innerhalb dieses Bedienbereichs erfolgen. Durch nachfolgendes Bedienen einer "Tab-Taste" 32 der Tastatur 30 kann die Auswahl dann zwischen den drei Eingabefeldern 110, 120, 130 innerhalb des ersten Auswahlbereichs 100 durchgeschaltet werden. Ist das dritte Eingabefeld 130 ausgewählt, können durch Bedienen der Enter-Taste 31 zusätzliche Informationen zur in diesem Fall dritten Speicher programmierbaren Steuerung in den Feldern 131, 132, 133 angezeigt werden, welche dann ebenfalls über eine Bedienung der Tab-Taste 32 ausgewählt werden können.

Die Tab-Taste 32 entspricht einem Beispiel für ein erstes Bedienelement gemäß der vorliegenden Beschreibung, während die Return-Taste 31 einem Beispiel für das zweite Bedienelement gemäß der vorliegenden Beschreibung entspricht.

Wird weiterhin beispielsweise ausgewähltem ersten Auswahlfelds 110 im ersten Bedienbereich 100 eine "Löschen-Taste" 33 oder "Backspace-Taste" 33 der Tastatur 30 gedrückt, so wechselt die Auswahl wieder auf den gesamten ersten Eingabebereich 100.

Die jeweils ausgewählten Bereiche oder Felder sind auf dem Bildschirm 40 dann jeweils durch einen dicken schwarzen Rahmen, der so nicht in Fig. 1 dargestellt ist, markiert, so dass ein Benutzer erkennen kann, welcher Bereich gerade ausgewählt ist.

Durch Verwendung der Tab-Taste wechselt die Auswahl dann, wenn der erste Bedienbereich 100 ausgewählt ist, zu einem zweiten Bedienbereich 210, der einen Unter-Bedienbereich 220 und Informationsfelder 211, 213 mit zugeordneten Eingabefeldern 212, 214, umfasst. Durch Benützen der Enter-Taste springt die Auswahl vom zweiten Bedienbereich 210 dann zum ersten Unterbereich 220 innerhalb des zweiten Bedienbereichs 210. Wird nachfolgend weiter die Tab-Taste bedient, so springt die Auswahl weiter zum ersten Eingabefeld 212 und dann zum zweiten Eingabefeld 214 und dann gegebenenfalls wieder zurück zum Unter-Bedienbereich 220 und bei entsprechender weiterer Bedienung der Tab-Taste zyklisch immer durch die genannten Felder. Ist beispielsweise ein Eingabefeld 212, 214 ausgewählt, so kann beispielsweise durch Benutzung der alphanumerischen Tastatur 30 ein Wert oder ein Text in die jeweiligen Felder eingegeben werden.

Erfolgt nach der Auswahl des Unter-Bedienbereichs 220 eine Bedienung der Enter-Taste 31, so wechselt die Auswahl in einen Unter-Unter-Bedienbereich 230 und bei nachfolgendem Benutzen der Tab-Taste 32 weiter zu den Eingabefeldern 222, 224, die jeweils zu im Unter-Bedienbereich 220 angezeigten Informationsfeldern 221, 223 zugehörig sind.

Bei Auswahl des Unter-Unter-Bedienbereichs 230 und nachfolgendem Bedienen der Enter-Taste springt die Auswahl dann zu den darin enthaltenen Eingabefeldern 232 und durch weiteres Bedienen der Tab-Taste 32 auch zum Eingabefeld 234, wobei diese Eingabefelder wiederum zu Informationsfeldern 231, 233 im Unter-Unter-Bedienbereich 230 gehören. Bei Auswahl beispielsweise des ersten Eingabefelds 232 im Unter-Unter-Bedienbereich 230 und nachfolgendem Bedienen der Löschen-Taste 33, springt die Auswahl wieder zurück zum Unter-Bedienbereich 230. Beispielsweise ein weiteres Betätigen der Löschen-Taste 33 würde dann die Auswahl zum UnterbedienBereich 220 zurückspringen lassen. Hier könnte dann beispielsweise durch ein Bedienen der Tab-Taste 32 wiederum zu den Eingabefeldern 212, 214, gewechselt werden oder auch durch ein Bedienen der Löschen-Taste 33 weiter zurück zum zweiten Bedienbereich 210.

Bei Auswahl des zweiten Bedienbereichs 210, dem zwei Unterbereiche 210/1, 210/2 zugeordnet sind, kann beispielsweise durch Betätigen einer Pfeil-Links- 35 oder Pfeil-Rechts-Taste 34 (für die genannten Pfeil-Tasten werden, wie in Fig. 1 dargestellt, beispielsweise die "Kleiner als"- 35 und "Größer als"-Taste 34 verwendet), ein Wechsel zu diesen Unterebenen, die beispielsweise vergleichbar zum zweiten Bedienbereich 210 aufgebaut sein können, ermöglicht. Eine Navigation innerhalb dieser weiteren Bedienbereiche 210/1, 210/2 kann dann beispielsweise wiederum wie diejenige innerhalb des zweiten Bedienbereichs 210 erfolgen.

Im Bedienbereich 210 können beispielsweise verschiedene Aspekte zu einer der im ersten Eingabebereich 100 ausgewählten Speicher programmierbaren Steuerungen oder Komponenten dargestellt sein, wobei im Unter-Unter-Bereich 230 Zusatzinformationen dazu aufgeführt sind.

Bei ausgewähltem zweiten Bedienbereich 210 kann durch ein Betätigen der Tab-Taste 32 ein Wechsel zu einem dritten Bedienbereich 300 mit wiederum drei Auswahlfeldern 310, 320, 330 erfolgen. Ein Bedienen der Enter-Taste 31 und nachfolgendes Bedienen der Tab-Taste 32 lässt dann einen Wechsel der Auswahl zwischen den drei Auswahlfeldern 310, 320, 330 des dritten Bedienbereichs 300 zu.

Fig. 1 zeigt die Anzeigeeinrichtung 40, nachdem nach einer Auswahl des dritten Auswahlelements 330 im dritten Bedienbereich wiederum die Enter-Taste 31 betätigt wurde und dadurch ein weiterer Unter-Bedienbereich 340 des Bedienbereichs 300 auf dem Bildschirm 40 angezeigt wurde. Dieser Unter-Bedienbereich enthält wiederum drei Auswahlelemente 341, 342, 343, die durch entsprechende Betätigung der Enter-Taste 31 und Tab-Taste 32 zugänglich gemacht werden.

Durch Benutzung der drei Tasten Enter 31, Tab 32, Löschen 33 ist auf die vorgestellte Weise also eine Navigation durch alle auf der Anzeigeeinheit 40 dargestellten Informationselemente in einer sehr eingänglichen Weise möglich. Durch die Nutzung der hierarchischen Anordnung der dargestellten Informationen und Eingabe-/Auswahlfelder kann ein Bediener ohne eine unnötig lange Einarbeitungszeit in die Bedien-Philosophie schnell zu denjenigen Feldern oder Bereichen gelangen, die er für beispielsweise eine Projektierung oder Einrichtung der entsprechenden Anlage, welcher die Eingabefelder beziehungsweise Auswahlfelder zugeordnet sind oder entsprechend eines Automatisierungssystems eingeben. So kann die Eingabe von Informationen z.B. schneller erfolgen, als bei bekannten Systemen, bei welchen beispielsweise alle sichtbaren Felder in einer langen Reihe angesprungen werden müssen. Eine zusätzliche Verwendung von beispielsweise den Pfeiltasten 34, 35 ermöglicht zusätzliche Navigationsmöglichkeiten durch nebengeordnete Bedienbereiche.

## Patentansprüche

1. System (10) zur Projektierung oder Einrichtung einer technischen Anlage und/oder eines Automatisierungssystems für eine technische Anlage,
mit einer Anzeigeeinrichtung (40) und Bedienelementen (31, 32, 33, 34, 35),
wobei auf der Anzeigeeinrichtung (40) verschiedene Bedienbereiche (100, 210, 220, 230, 300, 340) für verschiedene technische und/oder logische Komponenten der Anlage oder des Automatisierungssystems vorgesehen sind, und wobei auf der Anzeigeeinrichtung (40)
- ein erster Bedienbereich (100, 210, 300) für eine erste Komponente der Anlage oder des Automatisierungssystems mit ersten Informationen über die Komponente (211, 213) und/oder Eingabefeldern (110, 120, 130, 212, 214, 220, 310, 320, 330) zur Einstellung technischer oder logischer Eigenschaften bezüglich der Komponente, und
- ein zweiter Bedienbereich (100, 210, 300) für eine zweite Komponente der Anlage oder des Automatisierungssystems mit zweiten Informationen über die Komponente (211, 213) und/oder zweiten Eingabefeldern (110, 120, 130, 212, 214, 220, 310, 320, 330) zur Einstellung technischer oder logischer Eigenschaften bezüglich der Komponente vorgesehen ist,
**dadurch gekennzeichnet,**
**dass** ein erstes Bedienelement (32) für das System vorgesehen ist und das System derart eingerichtet und ausgebildet ist, dass bei Bedienung des ersten Bedienelements (32) und ausgewähltem ersten Bedienbereich (100, 210, 300) die Auswahl vom ersten Bedienbereich (100, 210, 300) zum zweiten Bedienbereich (100, 210, 300) wechselt, und
**dass** ein zweites Bedienelement (31) für das System vorgesehen ist und das System derart eingerichtet und ausgebildet ist, dass bei Bedienung des zweiten Bedienelements (31) und ausgewähltem ersten Bedienbereich (100, 210, 300) die Auswahl vom ersten Bedienbereich (100, 210, 300) zu einem ersten Eingabefeld (110, 120, 130, 212, 214, 220, 310, 320, 330) innerhalb des ersten Bedienbereichs (100, 210, 300) wechselt.

2. System gemäß Anspruch 1,
**dadurch gekennzeichnet,**
**dass** nach einer Auswahl des ersten Eingabefelds im ersten Bedienbereich (100, 210, 300) bei nachfolgender Bedienung des ersten Bedienelements (32) die Auswahl zu einem zweiten Eingabefeld (110, 120, 130, 212, 214, 220, 310, 320, 330) innerhalb des ersten Bereichs (100, 210, 300) wechselt.

3. System gemäß Anspruch 1 oder 2,
**dadurch gekennzeichnet,**
**dass** nach einer Auswahl eines Eingabefeldes (110, 120, 130, 212, 214, 220, 310, 320, 330) im ersten Bedienbereich (100, 210, 300) bei nachfolgender Bedienung eines dritten Bedienelements (33) der erste Bedienbereich (100, 210, 300) insgesamt für eine Bedienung ausgewählt wird.

4. System gemäß einem der Ansprüche 1 bis 3,
**dadurch gekennzeichnet,**
**dass** das System mehrere Bedienbereiche (100, 210, 300) gemäß einem der Ansprüche 1 bis 3 umfasst und
- mittels einer Bedienung des ersten Bedienelements (32) ein Wechsel der Auswahl zwischen den Bedienbereichen (100, 210, 300) oder zwischen Eingabefeldern (110, 120, 130, 212, 214, 220, 310, 320, 330) eines Bedienbereichs (100, 210, 300) in einer vorgebbaren oder vorgegebenen Reihenfolge ausgelöst wird,
- mittels einer Bedienung des zweiten Bedienelements (31) ein Eingabefeld (110, 120, 130, 212, 214, 220, 310, 320, 330) innerhalb des ausgewählten Bedienbereichs (100, 210, 300) ausgewählt wird, und
- mittels einer Bedienung des dritten Bedienelements (33) der einem ausgewählten Eingabefeld (110, 120, 130, 212, 214, 220, 310, 320, 330) zugeordnete Bedienbereich (100, 210, 300) insgesamt ausgewählt wird.

5. System gemäß Anspruch 4,
**dadurch gekennzeichnet,**
**dass** mindestens einer der Bedienbereiche (210, 220, 300) als Unterbedienbereiche (220, 230, 340) ausgebildete Eingabebereiche aufweist, wobei die Unterbedienbereiche (220, 230, 340) als Bedienbereiche gemäß einem der vorstehenden Ansprüche ausgebildet und eingerichtet sind und wobei weiterhin die Auswahl der Unterbedienbereiche (220, 230, 340) und deren Eingabefeldern (222, 224, 232, 234, 341, 342, 343) gemäß Anspruch 4 eingerichtet und ausgebildet ist.

6. System gemäß einem der Ansprüche 1 bis 5,
**dadurch gekennzeichnet,**
**dass** ausgewählte Bereiche (100, 210, 220, 230, 300, 340) und/oder Felder (110, 120, 130, 131, 132, 133, 212, 214, 222, 224, 232, 234, 310, 320, 330, 341, 342, 343) hervorgehoben dargestellt sind,
und/oder
**dass** nicht ausgewählte Bereiche (100, 210, 220, 230, 300, 340) und/oder Felder (110, 120, 130, 131, 132, 133, 212, 214, 222, 224, 232, 234, 310, 320, 330, 341, 342, 343) optisch in den Hintergrund gestellt sind.

7. Verfahren zur Bedienung eines Systems gemäß der Ansprüche 1 bis 6,
wobei durch ein Bedienen des ersten Bedienelements (32) die Auswahl
- von einem ausgewählten Bedienbereich (100, 210, 300) zu einem weiteren Bedienbereich (100, 210, 300),
- von einem ausgewählten Eingabeelement (110, 120, 130, 212, 214, 310, 320, 330) zu einem weiteren Eingabeelement (110, 120, 130, 212, 214, 310, 320, 330) oder Unter-Bedienbereich (220) eines Bedienbereichs (100, 210, 300) oder
- von einem ausgewählten Unter-Bedienbereich (220) zu einem weiteren Unter-Bedienbereich (220) oder einem Eingabeelement (110, 120, 130, 212, 214, 310, 320, 330) eines Bedienbereichs (100, 210, 300) in einer vorgegebenen oder vorgebbaren Reihenfolge wechselt, und
wobei durch ein Bedienen des zweiten Bedienelements (31) die Auswahl
- von einem ausgewählten Bedienbereich (100, 210, 300) zu einem Eingabeelement (110, 120, 130, 212, 214, 310, 320, 330) oder Unter-Bedienbereich (220) dieses Bedienbereichs (100, 210, 300) wechselt, und
wobei durch ein Bedienen des dritten Bedienelements (33) die Auswahl
- von einem ausgewählten Eingabeelement (110, 120, 130, 212, 214, 310, 320, 330) oder Unterbedienbereich (220) auf den nächsthöheren zugeordneten Bedienbereich (100, 210, 300) oder Unter-Bedienbereich wechselt.

8. Verfahren gemäß Anspruch 7,
**dadurch gekennzeichnet,**
**dass** ein ausgewählter Bereich (100, 210, 220, 230, 300, 340) und/oder ein ausgewähltes Feld (110, 120, 130, 131, 132, 133, 212, 214, 222, 224, 232, 234, 310, 320, 330, 341, 342, 343) hervorgehoben wird,
und/oder ein nicht ausgewählter Bereich (100, 210, 220, 230, 300, 340) und/oder ein nicht ausgewähltes Feld (100, 210, 220, 230, 300, 340) optisch in den Hintergrund gestellt wird.

9. Computerprogramm-Produkt für ein System (10) gemäß einem der Ansprüche 1 bis 6 zur Steuerung von Bediener-Eingaben und/oder zur Ansteuerung der Anzeigeeinrichtung (40) gemäß einem Verfahren nach einem der Ansprüche 7 oder 8.
